# EUROPÄISCHE PATENTSCHRIFT

(11) **EP 3 688 367 B1**
(45) Veröffentlichungstag und Bekanntmachung des Hinweises auf die Patenterteilung: **22.03.2023**
(21) Anmeldenummer: 18752675.1
(22) Anmeldetag: 30.07.2018
(51) Int. Cl.: F21S 41/265, F21S 41/20

(54) **KRAFTFAHRZEUGBELEUCHTUNGSVORRICHTUNG MIT UNTERTEILTE MIKRO-EINTRITTSOPTIKEN AUFWEISENDEN MIKROOPTIK-SYSTEMEN**
MOTOR VEHICLE ILLUMINATION DEVICE COMPRISING MICRO-OPTICAL SYSTEMS PROVIDED WITH SUBDIVIDED INCIDENCE MICRO-OPTICAL ELEMENTS
DISPOSITIF D'ÉCLAIRAGE DE VÉHICULE À MOTEUR COMPRENANT DES SYSTÈMES DE MICRO-OPTIQUES COMPRENANT DES MICRO-OPTIQUES D'ENTRÉE SUBDIVISÉES

(30) Priorität: 27.09.2017 AT 508262017
(43) Veröffentlichungstag der Anmeldung: 05.08.2020
(73) Patentinhaber: ZKW Group GmbH, 3250 Wieselburg (AT)
(72) Erfinder: MOSER, Andreas, 4320 Perg (AT)
(74) Vertreter: Patentanwaltskanzlei Matschnig & Forsthuber OG
(86) Internationale Anmeldenummer: PCT/AT2018/060169
(87) Internationale Veröffentlichungsnummer: WO 2019/060935

(56) Entgegenhaltungen:
- EP-A1- 0 738 903
- EP-A1- 2 110 689
- WO-A1-2011/027254
- WO-A1-2015/058227
- WO-A1-2017/037101
- WO-A1-2017/066817
- AT-A1- 517 885
- US-A1- 2015 252 975

## Beschreibung

Die Erfindung betrifft eine Kraftfahrzeugbeleuchtungsvorrichtung zum Erzeugen einer Lichtverteilung umfassend ein optisches Abbildungssystem und zumindest eine dem optischen Abbildungssystem zugeordnete Lichtquelle, wobei das optische Abbildungssystem einen Kollimator, eine Eintrittsoptik und eine Austrittsoptik umfasst, wobei der Kollimator zwischen der zumindest einen Lichtquelle und der Eintrittsoptik angeordnet und dazu eingerichtet ist, von der zumindest einen Lichtquelle erzeugte Lichtstrahlen zu kollimieren, um auf diese Weise kollimierte Lichtstrahlen zu erzeugen, und die kollimierten Lichtstrahlen auf die Eintrittsoptik des optischen Abbildungssystems zu richten, wobei die Eintrittsoptik eine Mehrzahl von einstückig miteinander ausgebildeten Mikro-Eintrittsoptiken aufweist, wobei jeder Mikro-Eintrittsoptik eine erste optische Achse zugeordnet ist, wobei alle ersten optischen Achsen in gleiche Richtung, vorzugsweise parallel zueinander, verlaufen, welche Richtung der Ausbreitungsrichtung der kollimierten Lichtstrahlen entspricht, wobei die Austrittsoptik eine Mehrzahl von einstückig miteinander ausgebildeten Mikro-Austrittsoptiken aufweist, wobei jeder Mikro-Austrittsoptik eine zweite optische Achse zugeordnet ist, wobei alle zweiten optischen Achsen in die gleiche Richtung, vorzugsweise parallel zueinander, verlaufen, wobei jede Mikro-Eintrittsoptik eine der kollimierten Lichtstrahlen zugewandte Lichteintrittsfläche und eine vorzugsweise plane, der Austrittsoptik zugewandte Lichtaustrittsfläche aufweist, wobei alle Lichtaustrittsflächen eine gemeinsame, vorzugsweise plane Fläche bilden.

Die oben genannte Art der Kraftfahrzeugbeleuchtungsvorrichtungen ist aus dem Stand der Technik bekannt. AT 514967 B1 der Anmelderin beschreibt ein Projektionslichtmodul für einen Kraftfahrzeugscheinwerfer, welches eine Eintritts-, eine Austrittsoptik und eine Blendenvorrichtung umfassen kann. Dabei ist sowohl die Eintrittsoptik als auch die Austrittsoptik als Mikrooptik-Arrays ausgebildet. Dabei bildet eine Mikro-Eintrittsoptik, eine Mikro-Austrittsoptik und eventuell eine zwischen diesen zwei Optiken angeordnete Blende ein optisches Abbildungssystem, mit dem ein Teil der gemeinsamen Lichtverteilung erzeugt wird. Dabei wird ein als dieser Teil der Lichtverteilung vor die Kraftfahrzeugbeleuchtungsvorrichtung abgebildetes Teil-Zwischenbild von der entsprechenden einzelnen Mikro-Eintrittsoptik erzeugt. Dies ist insofern von Nachteil als nur die Freiheitsgrade der jeweils einen Mikro-Eintrittsoptik verwendet werden können, um die Lichtverteilung zu gestalten.

Die Aufgabe der vorliegenden Erfindung besteht darin, die Kraftfahrzeugbeleuchtungsvorrichtung der oben genannten Art derart weiter zu bilden, dass die Anzahl der Möglichkeiten, die abgestrahlte Lichtverteilung zu modifizieren und/oder einzustellen und/oder fein zu justieren, erhöht wird.

Diese Aufgabe wird durch eine Kraftfahrzeugbeleuchtungsvorrichtung nach dem Anspruch 1, bei der jeder Mikro-Austrittsoptik zumindest zwei unterschiedlich ausgebildete Mikro-Eintrittsoptiken derart zugeordnet sind, dass auf die zumindest zwei unterschiedlich ausgebildeten Mikro-Eintrittsoptiken einfallende und durch diese zumindest zwei unterschiedlich ausgebildeten Mikro-Eintrittsoptiken durchtretende Lichtstrahlen ausschließlich auf die der zumindest zwei unterschiedlich ausgebildeten Mikro-Eintrittsoptiken zugeordnete Mikro-Austrittsoptik einfallen und nach dem Durchtreten durch die Mikro-Austrittsoptik unterschiedliche Teil-Bereiche der Lichtverteilung bilden.

Zum Beispiel kann man die Ausbildung und/oder die Form der einzelnen Mikro-Eintrittsoptiken dazu verwenden, um bestimmte, gewünschte Änderungen der abgestrahlten Lichtverteilung zu bewirken.

Darüber hinaus ist es erfindungsgemäß vorgesehen, dass die zumindest zwei Mikro-Eintrittsoptiken als ein NxM Mikro-Eintrittsoptik-Array, wobei N ≥ 2 oder M ≥ 2 gilt, vorzugsweise als ein 3x3 Mikro-Eintrittsoptik-Array ausgebildet sind, beziehungsweise in einem NxM Mikro-Eintrittsoptik-Array, wobei N ≥ 2 oder M ≥ 2 gilt, vorzugsweise in einem 3x3 Mikro-Eintrittsoptik-Array angeordnet sind.

Außerdem ist es erfindungsgemäß vorgesehen, dass die Eintrittsoptik dazu eingerichtet ist, ein Zwischenbild (mithilfe der zumindest zwei unterschiedlich ausgebildeten Mikro-Eintrittsoptiken) zu erzeugen, welches Zwischenbild durch die Austrittsoptik vor die Kraftfahrzeugbeleuchtungsvorrichtung abgebildet wird, wobei das Zwischenbild vorzugsweise vor der Austrittsoptik liegt.

Es kann vorteilhaft sein, wenn alle Mikro-Eintrittsoptiken als Linsen ausgebildet sind. Im Vergleich zu herkömmlichen Linsen haben diese Linsen einen geringeren Durchmesser und folglich auch eine geringere Mittendicke. Dies kann vorteilhaft hinsichtlich der Herstellung der Linsen sein. Weiters ergibt sich dadurch auch eine Reduktion der Dicke der ganzen Eintrittsoptik. Dies ermöglicht eine geringere Längenausdehnung der Eintrittsoptik und, als Folge, des ganzen optische Abbildungssystems und bringt daher Bauraumvorteile. Darüber hinaus weisen Linsen mit einer geringen Mittendicke eine geringere Wandstärkevariation auf. Daraus ergibt sich, dass Fertigungstoleranzen gering gehalten werden können.

Es kann darüber hinaus vorteilhaft sein, wenn zumindest eine erste Mikro-Eintrittsoptik der zumindest zwei unterschiedlich ausgebildeten, der Mikro-Austrittsoptik zugeordneten und/oder korrespondierenden Mikro-Eintrittsoptiken derart ausgebildet ist und der Mikro-Austrittsoptik derart korrespondiert und/oder zugeordnet ist, dass kollimierte auf diese zumindest eine erste Mikro-Eintrittsoptik einfallende Lichtstrahlen nach dem Austreten aus der Mikro-Austrittsoptik in Richtung eines HV-Bereichs der Lichtverteilung propagieren. Die zumindest eine erste Mikro-Eintrittsoptik kann beispielsweise als eine plankonvexe Linse ausgebildet sein.

Wenn die Mikro-Eintrittsoptiken als Linsen, beispielsweise als Freiformlinsen ausgebildet sind, und jeder Mikro-Austrittsoptik beispielsweise ein 3x3 Mikro-Eintrittsoptik-Array korrespondiert und/oder zugeordnet ist, dann kann beispielsweise eine zentrale Linse des Arrays stärker fokussieren als ihre Nachbarn, um auf diese Weise ein höheres Maximum der Beleuchtungsstärke im HV-Punkt zu erzielen. Dabei ist unter dem Begriff "HV-Bereich" ein Bereich um den HV-Punkt zu verstehen, der in etwa von -5° bis +5° horizontal und von -5° bis +5° vertikal ausgedehnt ist. Vorzugsweise beträgt die vertikale Ausdehnung des HV-Bereichs von -2° bis +2°, wenn die Kraftfahrzeugbeleuchtungsvorrichtung zum Realisieren einer Fahrlichtfunktion (beispielsweise Erzeugen einer Abblendlicht- oder Fernlichtverteilung) verwendet wird und von -5° bis +5°, wenn Kraftfahrzeugbeleuchtungsvorrichtung zum Realisieren Signallichtverteilung (beispielsweise Erzeugen einer Abbiegerlichtverteilung) eingesetzt wird.

Außerdem kann es zweckdienlich sein, wenn zumindest eine zweite Mikro-Eintrittsoptik der zumindest zwei unterschiedlich ausgebildeten, der Mikro-Austrittsoptik zugeordneten und/oder korrespondierenden Mikro-Eintrittsoptiken derart ausgebildet ist und der Mikro-Austrittsoptik derart korrespondiert und/oder zugeordnet ist, dass kollimierte auf diese zumindest eine zweite Mikro-Eintrittsoptik einfallende Lichtstrahlen nach dem Austreten aus der Mikro-Austrittsoptik in Richtung außerhalb eines HV-Bereichs der Lichtverteilung propagieren. Die zumindest eine zweite Mikro-Eintrittsoptik kann beispielsweise als eine plankonkave Linse oder als ein plankonkaves Linsenstück oder als ein plankonvexes Linsenstück ausgebildet sein. Dabei gilt auch, dass wenn die Mikro-Eintrittsoptiken als Linsen, beispielsweise als Freiformlinsen ausgebildet sind, und jeder Mikro-Austrittsoptik beispielsweise ein 3x3 Mikro-Eintrittsoptik-Array korrespondiert und/oder zugeordnet ist, dann können beispielsweise die an die zentrale Linse des Arrays angrenzenden, diese zentrale Linse umgebenden Linsen schwächer fokussieren als die zentrale Linse, um auf diese Weise die Breite der Lichtverteilung bestimmen bzw. Ränder der Lichtverteilung bilden.

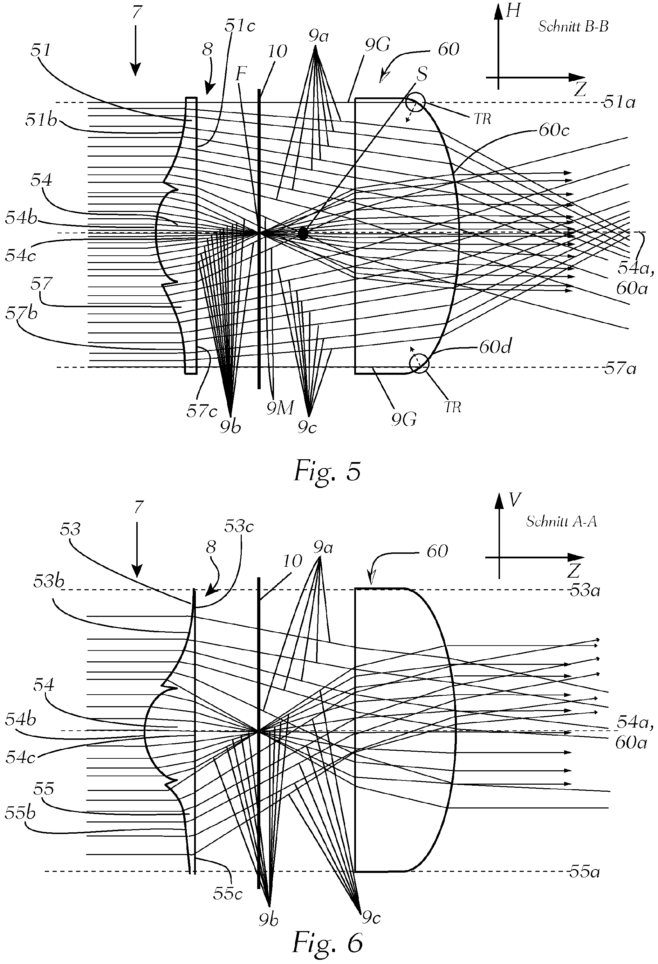

Außerdem kann es zweckmäßig sein, wenn die Lichteintrittsflächen der Mikro-Eintrittsoptiken als Freiformflächen ausgebildet sind. Dabei wird unter einer Freiformfläche eine Fläche verstanden, die für eine Freiformlinse typisch ist. Zum Beispiel kann die Lichteintrittsfläche der zumindest einen ersten Mikro-Eintrittsoptik der zumindest zwei Mikro-Eintrittsoptiken in horizontale und in vertikale Richtung unterschiedlich gekrümmt sein. Die Lichteintrittsfläche der zumindest einen zweiten Mikro-Eintrittsoptik der zumindest zwei Mikro-Eintrittsoptiken kann ebenfalls als eine Freiformfläche ausgebildet sein. Es kann darüber hinaus zweckmäßig sein, wenn die Verläufe der Freiformflächen der Lichteintrittsflächen der genannten zumindest einen ersten und zumindest einen zweiten Mikro-Eintrittsoptiken unterschiedlich sind (siehe insbesondere Figuren 5 bis 8).

Die Lichteintrittsflächen der Mikro-Eintrittsoptiken und die Lichtaustrittsflächen der Mikro-Austrittsoptiken können unterschiedlich gekrümmt sein. Dabei können bei einem Mikrooptik-System, das beispielsweise eine Mikro-Austrittsoptik, die zumindest zwei der Mikro-Austrittsoptik zugeordneten Mikro-Eintrittsoptiken und optional eine Blende umfasst, jede Mikro-Eintrittsoptik eine eigene Krümmung der Lichteintrittsfläche aufweisen, welche Krümmung sich auch von der Krümmung der Lichtaustrittsfläche der Mikro-Austrittsoptik unterscheiden kann. Dies ermöglicht die Parameter, wie zum Beispiel Brennweite, Stärke der Kollimation eines durchtretenden Lichtstrahls usw., jedes einzelnen Mikrooptik-Systems unabhängig von den Parametern der anderen Mikrooptik-Systeme zu variieren. Diese Parameter werden oft in der Fachliteratur als "Freiheitsgrade des optischen Systems" genannt.

Im Zusammenhang mit der vorliegenden Erfindung wird unter dem Begriff "Vertikale"/"Horizontale" eine Achse eines mit der Kraftfahrzeugbeleuchtungsvorrichtung verbundenen Koordinatensystems, die vertikal/horizontal ausgerichtet ist, wenn die Kraftfahrzeugbeleuchtungsvorrichtung in einer Lage befindet, welche Lage einem Einbauzustand der Kraftfahrzeugbeleuchtungsvorrichtung in ein Kraftfahrzeug entspricht.

Die Erfindung wird nachstehend anhand beispielhafter nichteinschränkender Ausführungsformen näher erläutert, die in einer Zeichnung veranschaulicht sind. In dieser zeigt:
Fig. 1 ein Lichtmodul in Explosionsdarstellung;
Fig. 2 ein Lichtmodul mit einer Blendenvorrichtung in Explosionsdarstellung;
Fig. 3 einen vergrößerten Ausschnitt des Lichtmoduls aus der Fig. 2;
Fig. 4 eine Hinteransicht des vergrößerten Ausschnitts der Fig. 3;
Fig. 5 einen B-B -Schnitt der Fig. 3;
Fig. 6 einen A-A -Schnitt der Fig. 3;
Fig. 7 einen horizontalen Schnitt eines vergrößerten Ausschnitts einer weiteren Ausführungsform eines erfindungsgemäßen Lichtmoduls mit Freiform-Mikro-Eintrittsoptiken, und
Fig. 8 einen vertikalen Schnitt eines vergrößerten Ausschnitts einer weiteren Ausführungsform eines erfindungsgemäßen Lichtmoduls.

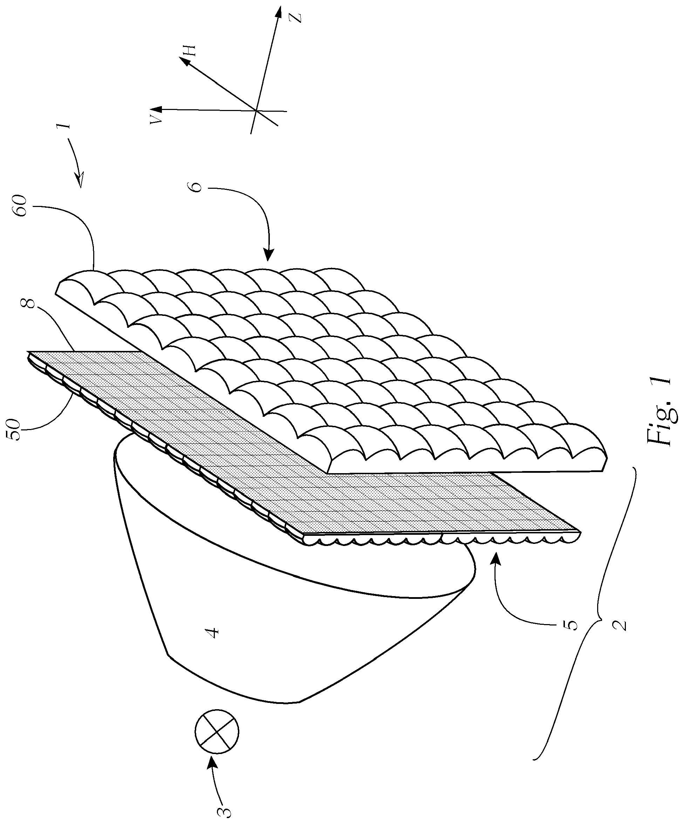

Zunächst wird auf die Figur 1 Bezug genommen. Diese zeigt ein Lichtmodul 1, welches einer erfindungsgemäßen Kraftfahrzeugbeleuchtungsvorrichtung entsprechen kann. Ein derartiges Lichtmodul kann beispielsweise in einem Frontscheinwerfer eines Kraftfahrzeugs eingesetzt werden und zum Erzeugen einer, beispielsweise gesetzeskonformen Lichtverteilung eingerichtet sein. Die gesetzlichen Vorgaben und Normen können dabei für verschiedene Länder und/oder Regionen der Welt unterschiedlich sein. Das erfindungsgemäße Lichtmodul kann dabei die Vorgaben in mehreren Ländern/Regionen (z.B. EU, Nordamerika, Japan und China) gleichzeitig erfüllen. Das Lichtmodul umfasst ein optisches Abbildungssystem 2 und zumindest eine dem optischen Abbildungssystem zugeordnete Lichtquelle 3. Das optische Abbildungssystem weist einen Kollimator 4, welcher dazu eingerichtet ist, von der zumindest einen Lichtquelle 3 erzeugte Lichtstrahlen zu kollimieren, eine Eintrittsoptik 5 und eine Austrittsoptik 6 auf. Der Kollimator ist üblicherweise zwischen der zumindest einen Lichtquelle 3 und der Eintrittsoptik 5 angeordnet. Der Kollimator 4 kann beispielsweise als eine TIR-Linse (TIR für Total Internal Reflection) ausgebildet sein. Weiters kann ein Kollimator als ein aus einem Material, dessen Brechungsindex größer als der Brechungsindex der Luft (bei üblichen Betriebstemperaturen eines Kraftfahrzeugscheinwerfers) ist, - wie Glas oder Kunststoff - ausgebildeter optischer Körper ausgebildet sein, welcher optische Körper das Licht aufgrund des unter dem Namen "totale innere Reflexion" bekannten physikalischen Effekts von seiner Lichteinkoppelfläche zu seiner Lichtauskoppelfläche beinah ohne Verluste leitet. Dabei breitet sich das im Wesentlichen gesamte an der Lichtauskoppelfläche des optischen Körpers gebrochene Licht durch die Luft weiter, vorzugsweise eine vorgegebene Richtung (in Figur 1 - Richtung Z), aus. Denkbar ist es auch, dass der Kollimator 4 als ein Reflektor ausgebildet ist, d.h. als eine (vor allem sichtbares) Licht reflektierende Fläche, die sich durch Luft ausbreitende Lichtstrahlen in vorzugsweise eine vorgegebene Richtung (in Figur 1 - Richtung Z) umlenkt.

Das Lichtmodul kann auch andere Teile, wie beispielsweise Kühlkörper, Tragrahmen, mechanische und/oder elektrische Stellvorrichtungen, Abdeckungen und so weiter und sofort, umfassen. Der Einfachheit halber sind hier aber die Teile des Lichtmoduls schematisch gezeigt, welche sich bei der Darstellung der erfinderischen Idee als nützlich erweisen können. Dabei wird auf eine eingehende Beschreibung der oben genannten standardmäßigen Bauteile eines Lichtmoduls verzichtet.

Das von der Lichtquelle 3 erzeugte Licht, welches in den Kollimator 4 gelangt, wird von diesem zu einem Lichtbündel vorzugsweise aus kollimierten Lichtstrahlen 7 geformt, wobei die kollimierten Lichtstrahlen im Wesentlichen parallel zueinander ausgerichtet sind (siehe beispielsweise Figuren 5 bis 8). Dabei bedeutet im Wesentlichen parallel, dass die kollimierten Strahlen nur dann parallel verlaufen, wenn die Lichtquelle als eine ideale punktförmige Lichtquelle ausgebildet ist. Diese mathematische Abstraktion kommt aber im modernen KFZ-Bau nur sehr selten vor. Bei ausgedehnten (nicht punktförmiger) Lichtquellen (beispielsweise einer LED-Lichtquelle) ergibt sich je nach Abbildungsmaßstab eine Abweichung von der oben erwähnten Parallelität der Lichtstrahlen im Lichtbündel.

Dabei ist eine Abweichung von bis zu +/- 15° möglich. Unter Umständen ist eine noch größere Abweichung möglich. Die kollimierten Lichtstrahlen 7 fallen auf die Eintrittsoptik 5 des optischen Abbildungssystems 2 ein. Das gezeigte Lichtmodul 1 eignet sich besonders gut zur Erzeugung einer Fernlichtverteilung.

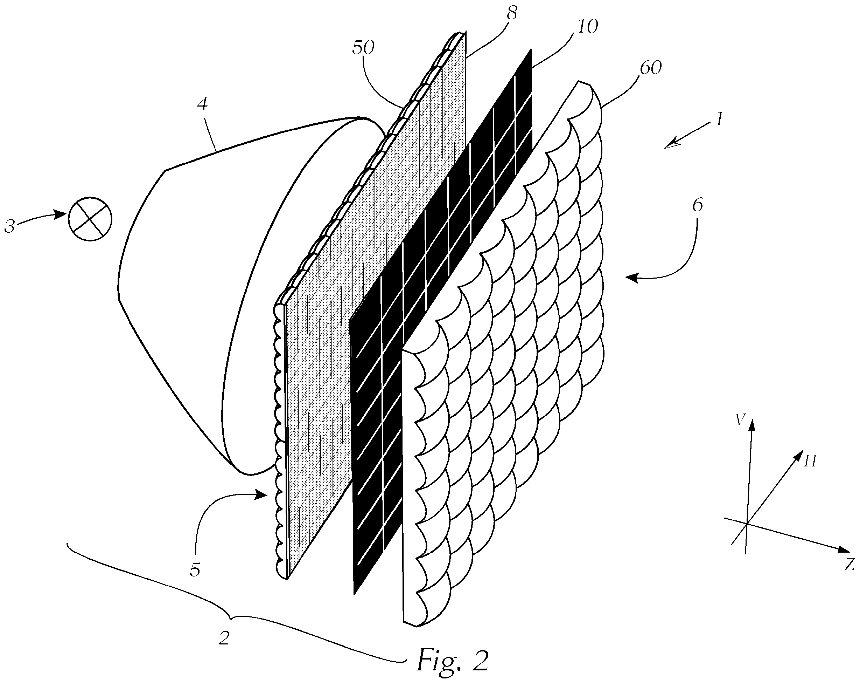

Figur 2 zeigt das Lichtmodul 1 aus Figur 1, bei welchem das optische Abbildungssystem 2 eine Blendenvorrichtung 10 umfasst, die zwischen der Eintrittsoptik 5 und der Austrittsoptik 6 angeordnet ist. Wie aus dem Stand der Technik bekannt ist (siehe z.B. AT 514 967 B1 der Anmelderin), können sich solche Blendenvorrichtungen 10 zum Beispiel beim Erzeugen von Abblendlichtverteilungen als zweckdienlich erweisen. Dabei kann die Hell-Dunkel-Grenze einer Abblendlichtverteilung durch das Ausbilden von Blendenkanten der Blenden der in einer Zwischenbildebene angeordneten Blendenvorrichtung 10 erzeugt werden. Das optisches Abbildungssystem 2 kann auch weitere (hier nicht gezeigte) Beleuchtungsvorrichtungen umfassen, die beispielsweise, wie in AT 517 885 A1 der Anmelderin eingehend beschrieben ist, zur Behebung von Abbildungsfehlern vorgesehen sind. Für eine detaillierte Beschreibung der optischen Abbildungssysteme mit solchen Beleuchtungsvorrichtungen und insbesondere für eine detaillierte Beschreibung der Beleuchtungsvorrichtung, deren optisch wirksamen Kanten zur Bildung einer Abblendlichtverteilung und/ oder zur Behebung von Abbildungsfehlern wird auf die Schriften AT 514 967 B1 und AT 517 885 A1 explizit verwiesen.

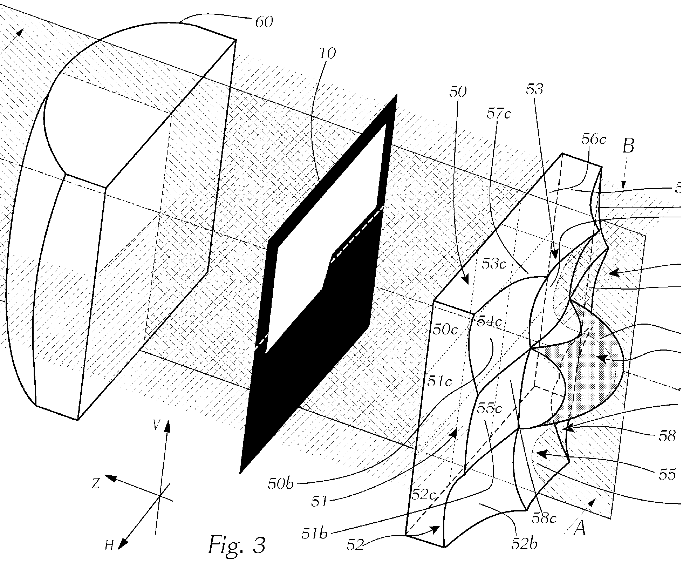

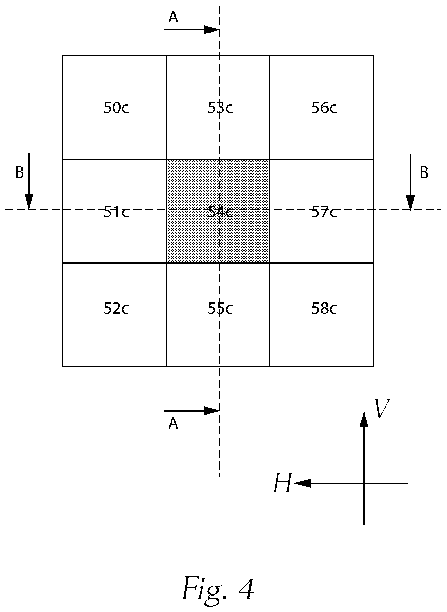

Figur 3 zeigt einen vergrößerten Ausschnitt des Lichtmoduls der Figur 2. Die Eintrittsoptik 5 weist dabei eine Mehrzahl von einstückig miteinander ausgebildeten Mikro-Eintrittsoptiken 50 bis 58 auf. Jeder Mikro-Eintrittsoptik 50 bis 58 ist eine erste optische Achse 50a bis 58a zugeordnet, wobei alle ersten optischen Achsen 50a bis 58a in gleiche Richtung Z verlaufen, welche Richtung Z der Ausbreitungsrichtung der kollimierten Lichtstrahlen 7 entspricht (siehe auch Figuren 5 bis 8). Die Austrittsoptik 6 weist ebenfalls eine Mehrzahl von einstückig miteinander ausgebildeten Mikro-Austrittsoptiken 60 auf (Figur 3 zeigt eine davon), wobei jeder Mikro-Austrittsoptik 60 eine zweite optische Achse 60a zugeordnet ist und alle zweiten optischen Achsen 60a in die gleiche Richtung (Richtung Z in Figur 3) verlaufen. Hinsichtlich des Zusammenbaus ist es vorteilhaft, wenn einander zugewandte Lichteintrittsflächen der Eintrittsoptik 5 und der Austrittsoptik 6 plan ausgebildet sind. Darüber hinaus weist jede Mikro-Eintrittsoptik 50 bis 58 eine der kollimierten Lichtstrahlen 7 zugewandte, vorzugsweise gekrümmte, beispielsweise konvex ausgebildete oder freigeformte, Lichteintrittsfläche 50b bis 58b und eine vorzugsweise plane, der Austrittsoptik 6 zugewandte Lichtaustrittsfläche 50c bis 58c auf, wobei alle Lichtaustrittsflächen 50c bis 58c eine gemeinsame, vorzugsweise plane Fläche 8 - die Lichtaustrittsfläche der Eintrittsoptik - bilden (siehe auch Figuren 2 und 5). Erfindungsgemäß sind jeder Mikro-Austrittsoptik 60 zumindest zwei unterschiedlich ausgebildete Mikro-Eintrittsoptiken 50 bis 58 derart zugeordnet, dass auf die zumindest zwei unterschiedlich ausgebildeten Mikro-Eintrittsoptiken 50 bis 58 einfallende und durch diese zumindest zwei unterschiedlich ausgebildeten Mikro-Eintrittsoptiken 50 bis 58 durchtretende Lichtstrahlen 9a bis 9c (siehe auch Figuren 5 bis 8) ausschließlich auf die der zumindest zwei unterschiedlich ausgebildeten Mikro-Eintrittsoptiken 50 bis 58 zugeordnete und/oder korrespondierende Mikro-Austrittsoptik 60 einfallen (dadurch können beispielsweise Abbildungsfehler reduziert werden) und nach dem Durchtreten durch die Mikro-Austrittsoptik 60 unterschiedliche Teil-Bereiche (z.B. HV-Bereich und Ränder beziehungsweise Randbereiche) der Lichtverteilung bilden (siehe auch Figuren 5 bis 8). Bei dem gezeigten Ausführungsbeispiel ist jeder Mikro-Austrittsoptik ein 3x3 Mikro-Eintrittsoptik-Array zugeordnet (siehe auch Figur 4), wobei eine in einer Mitte des Mikro-Eintrittsoptik-Arrays liegende Mikro-Eintrittsoptik 54 - Mitte-Optik - unterschiedlich von den anderen Mikro-Eintrittsoptiken 50 bis 53 und 55 bis 58 des Mikro-Eintrittsoptik-Arrays ausgebildet ist. Dies sollte aber nicht so verstanden werden, dass die Mikro-Eintrittsoptiken 50 bis 53 und 55 bis 58 des Mikro-Eintrittsoptik-Arrays alle gleich ausgebildet sein müssen. Es ist durchaus denkbar, dass die Mikro-Eintrittsoptiken 51, 53, 55, 57 eine erste Gruppe gleicher Mikro-Eintrittsoptiken des Mikro-Eintrittsoptik-Arrays und die Mikro-Eintrittsoptiken 50, 52, 56, 58 eine zweite Gruppe gleicher Mikro-Eintrittsoptiken des Mikro-Eintrittsoptik-Arrays bilden, wobei die Mikro-Eintrittsoptiken aus der ersten und aus der zweiten Gruppe unterschiedlich ausgebildet sein können. Eine Ausführungsform bei der die Mikro-Eintrittsoptiken des Mikro-Eintrittsoptik-Arrays derart ausgebildet sind wird oft als "symmetrische Auslegung" bezeichnet. Darüber hinaus ist es denkbar, dass die der ersten bzw. der zweiten Gruppe angehörenden Mikro-Eintrittsoptiken nicht alle gleich ausgebildet sind. So kann beispielsweise ein erster Teil der ersten Gruppe der Mikro-Eintrittsoptiken - die Mikro-Eintrittsoptiken 53 und 55 - gleich ausgebildet sein ("horizontal symmetrische Auslegung"), wobei die übrigen Mikro-Eintrittsoptiken der ersten Gruppe - die Mikro-Eintrittsoptiken 51 und 57 - einen zweiten Teil der ersten Gruppe bilden können und gleich untereinander aber unterschiedlich von den Mikro-Eintrittsoptiken des ersten Teils der ersten Gruppe ausgebildet sein können ("vertikal symmetrische Auslegung"). Dabei ist es denkbar, dass alle Mikro-Eintrittsoptiken der zweiten Gruppe alle unterschiedlich ausgebildet sind und beispielsweise keiner einzigen Mikro-Eintrittsoptik der ersten Gruppe gleichen beziehungsweise kongruent sind. Obendrein ist es auch denkbar, dass alle Mikro-Eintrittsoptiken der ersten und der zweiten Gruppe individuell ausgelegt sind (unterschiedlich ausgebildet sind). Dies hat zum Vorteil, dass die Anzahl der Freiheitsgrade beim Justieren/Einstellen einer Lichtverteilung erhöht wird und eine bessere/feinere Einstellung der zu erzeugenden Lichtverteilung ermöglicht. Im Allgemeinen können die zumindest zwei Mikro-Eintrittsoptiken 50 bis 58 als ein NxM Mikro-Eintrittsoptik-Array, wobei N ≥ 2, M ≥ 1 oder N ≥ 1, M ≥ 2 gilt, ausgebildet sein, wobei alle Mikro-Eintrittsoptiken des Mikro-Eintrittsoptik-Array unterschiedlich voneinander ausgebildet sein können. Es kann dabei zweckmäßig sein, dass die Mikro-Eintrittsoptik-Arrays der Eintrittsoptik 5 dazu eingerichtet sind, ein Zwischenbild zu erzeugen, das vorzugsweise vor der Austrittsoptik 6 liegt.

Die einzelnen Mikro-Eintrittsoptiken 50 bis 58 des Mikro-Eintrittsoptik-Arrays können beispielsweise wie folgt ausgebildet sein. Die Mitte-Optik 54 kann als eine plankonvexe Linse ausgebildet sein und durch einen konvexen Verlauf ihrer Lichteintrittsfläche 54b eine sammelnde Wirkung aufweisen. Diese wird von plankonkaven Linsen- beziehungsweise Linsenstücken 51 bis 53 und 55 bis 58 angegrenzt, die durch einen konkaven Verlauf ihrer Lichteintrittsflächen 51b bis 53b und 55b bis 58b eine streuende Wirkung aufweisen. Die die Mitte-Optik 54 in horizontaler Richtung H und in vertikaler Richtung V angrenzenden plankonkaven Linsenstücke 51, 53, 55, 57 können beispielsweise als Hälften einer hinsichtlich einer Symmetrieebene symmetrischen plankonkaven Linse ausgebildet sein - Linsenhälften -, wobei die Symmetrieebene die plankonkave Linse in zwei vorzugsweise gleiche Hälften teilt. Zweckmäßigerweise sind die Linsenhälften derart angeordnet, dass diese hin zu der Mitte-Optik 54 eine immer größer werdende Materialdicke aufweisen, wodurch beispielsweise die plankonkave Linse beziehungsweise das Linsenstück (hier - Linsenhälfte) hin zu der Mitte-Optik 54 eine stärkere Brechkraft (als an ihrem Rand und ergo an einem Rand des Mikro-Eintrittsoptik-Arrays) aufweist und die kollimierten Lichtstrahlen 7 stärker (als an ihrem Rand) umlenkt (siehe auch Figuren 5 bis 6). Die restlichen vier Mikro-Eintrittsoptiken - Eck-Optiken 50, 52, 56 und 58 - des hier gezeigten Mikro-Eintrittsoptik-Arrays, die die Mitte-Optik 54 diagonal angrenzen, können ebenfalls als plankonkave Linsen beziehungsweise Linsenstücke ausgebildet sein. Vorzugsweise sind die Eck-Optiken 50, 52, 56 und 58 als ein Linsenviertel einer um ihre optische Achse rotationssymmetrischen plankonkaven Linse ausgebildet, wobei jedes Linsenviertel der rotationssymmetrischen plankonkaven Linse den anderen drei Linsenvierteln gleich ausgebildet ist. Zweckmäßigerweise sind die Linsenviertel in den Ecken des Mikro-Eintrittsoptik-Arrays derart angeordnet, dass diese diagonal hin zu der Mitte-Optik 54 eine immer größer werdende Materialdicke aufweisen, wodurch beispielsweise die plankonkave Linse beziehungsweise das Linsenstück (hier - Linsenviertel) diagonal hin zu der Mitte-Optik 54 eine stärkere Brechkraft (als an ihrem Rand und ergo an einem Rand des Mikro-Eintrittsoptik-Arrays) aufweist und die kollimierten Lichtstrahlen 7 stärker (als an ihrem Rand) umlenkt (siehe auch Figuren 5 bis 6).

Die Figur 4 zeigt eine schematische Vorderansicht (Ansicht von vorn, d.h. gegen der Richtung Z) des vergrößerten Ausschnitts der Eintrittsoptik 5 aus der Figur 3. Der Figur 4 ist beispielsweise zu entnehmen, dass die mittige Mikro-Eintrittsoptik, - in der Figur 4 grau gefärbt, - und diese an zumindest einem Punkt angrenzende Mikro-Eintrittsoptiken in einem rechteckigen Muster angeordnet sein können, wobei alle Zellen dieses rechteckigen Musters, wie gezeigt, gleich groß sein können. Es ist auch denkbar, dass die Zellen unterschiedlich groß sind. Explizit zu sehen in der Figur 4 sind die Lichtaustrittsflächen 50c bis 58c der Mikro-Eintrittsoptiken. Diese weisen eine rechteckige, gar quadratische Form auf. Die Form der Lichtaustrittsflächen 50c bis 58c und der Zellen kann von der quadratischen bzw. rechteckigen Form abweichen. Zweckdienlich kann es allerdings sein, wenn die Gesamtfläche der Lichtaustrittsflächen 50c bis 58c der Mikro-Eintrittsoptiken 50 bis 58 des Mikro-Eintrittsoptik-Arrays gleich groß wie die den Lichtaustrittsflächen 50c bis 58c zugewandte Lichteintrittsfläche 60b der Mikro-Austrittsoptik 60, welcher Mikro-Austrittsoptik 60 die Mikro-Eintrittsoptiken 50 bis 58 des Mikro-Eintrittsoptik-Arrays zugeordnet sind.

Um konkrete beispielhafte Formen der Lichteintrittsflächen der Mikro-Eintrittsoptiken und ihre Wirkung auf den Strahlengang der kollimierten Lichtstrahlen 7 durch das optisches Abbildungssystem 2 zu veranschaulichen, wird nun auf Figuren 5 bis 8 Bezug genommen. Die Figur 6 zeigt einen Schnitt A-A der Figur 3. Die kollimierten Lichtstrahlen 7 fallen auf die Mikro-Eintrittsoptiken 53 bis 55 ein. Jede Mikro-Eintrittsoptik formt aus den kollimierten Lichtstrahlen 7, die auf diese Mikro-Eintrittsoptik einfallen, ein Lichtbündel 9a bis 9c, welche ein Zwischenbild ausbilden. Das Zwischenbild kann sich beispielsweise in einer mit der Position der Blendenvorrichtung 10 übereinstimmenden Ebene befinden. Bei der gezeigten bevorzugten Ausführungsform ist die Blendenvorrichtung 10 in der Zwischenbildebene angeordnet. Bei den in Figuren 5 und 6 - Figur 5 ist ein Schnitt B-B der Figur 3 - gezeigten Mikro-Eintrittsoptiken 51, 53 bis 55 und 57 des Mikro-Eintrittsoptik-Arrays kann die mittige Linse als die oben beschriebene Mitte-Linse 54 ausgebildet sein, wobei die an diese mittige Linse 54 angrenzende Linsen 51, 53, 55 und 57 als oben beschriebene plankonkave Linsenstücke, beispielsweise Linsenhälften, ausgebildet sein können. Wie bereits erwähnt, ist die Mitte-Linse 54 vorzugsweise als eine plankonvexe Linse ausgebildet und sammelt das Licht sowohl in horizontaler H als auch in vertikaler Richtung V. Dabei ist einer Zusammenschau der Figuren 5 und 6 zu entnehmen, dass die Brechkraft der Lichteintrittsfläche 54b der Mitte-Linse 54 in horizontaler Richtung H nicht der Brechkraft der Lichteintrittsfläche 54b der Mitte-Linse 54 in vertikaler Richtung V sein muss. In horizontaler Richtung H kann die Lichteintrittsfläche 54b der Mitte-Linse 54 schwächer gekrümmt sein und deshalb weniger fokussieren. Durch eine größere Fokussierung in der vertikalen Richtung V (im Allgemeinen - in der vertikalen Ebene) kann beispielsweise eine höhere Beleuchtungsstärke in einem zentralen Bereich - Zentrum - einer erzeugten Lichtverteilung erzielt werden. Dieser zentrale Bereich entspricht dem in der Lichttechnik sogenannten "HV-Punkt" (ein Punkt, an dem die horizontal verlaufende HH-Linie oder der Horizont die vertikal verlaufende VV-Linie schneidet) beziehungsweise "HV-Bereich" (ein Bereich um den HV-Punkt).

Darüber hinaus ist der Figur 5, die einen horizontalen Schnitt (B-B-Schnitt) eines vergrößerten Ausschnitts des Lichtmoduls 1 mit einer Blendenvorrichtung 10 der Figur 3 zeigt, zu entnehmen, dass die horizontalen Schnitte der Lichteintrittsflächen 51b und 57b der die mittige Linse 54 in horizontaler Richtung H angrenzenden Mikro-Eintrittsoptiken 51 und 57 Krümmungen aufweisen, die von den Krümmungen der Lichteintrittsflächen 53b und 55b der die mittige Linse 54 in vertikaler Richtung V angrenzenden Mikro-Eintrittsoptiken 53 und 55 unterscheiden. Obgleich Figuren 5 und 6 unterschiedliche Schnitte (vertikal und horizontal) eines Mikro-Eintrittsoptik-Arrays zeigen, gilt dies in Bezug auf die vorliegende Erfindung allgemein: Mikro-Eintrittsoptiken, die eine mittige, zum Bilden des HV-Bereichs einer Lichtverteilung vorgesehene Linse eines Mikro-Eintrittsoptik-Arrays angrenzen, können alle unterschiedlich ausgebildet sein, unterschiedliche Krümmungen der beispielsweise freiförmig verlaufenden Lichteintrittsflächen aufweisen und sind dazu vorgesehen, Ränder (Außenränder) der Lichtverteilung zu bilden.

Darüber hinaus kann die mittige Linse 54 astigmatisch ausgebildet sein, um beispielsweise das Gestalten eines Verlaufs einer Lichtverteilung in horizontaler H und vertikaler Richtung V unterschiedlich zu ermöglichen, wie es den Strahlengängen der Figuren 5 und 6 zu entnehmen ist (siehe insbesondere Lichtbündel 9b). Umgekehrt kann die Form der mittigen Linse 54 resultierend aus den Anforderungen des Lichtverteilungsverlaufs bestimmt werden. Bezugnehmend auf Figur 6 lenken die zu der mittigen Linse 54 in vertikaler Richtung benachbarten Mikro-Eintrittsoptiken 53 und 55 vorzugsweise im Wesentlichen die auf diese Mikro-Eintrittsoptiken 53, 55 einfallenden kollimierten Strahlen 7 um, ohne aus diesen ein konvergierendes oder divergierendes Lichtbündel gebildet wird, und weisen somit im Wesentlichen Wirkung eines Prismas auf. Diese in vertikaler Richtung benachbarten Mikro-Eintrittsoptiken 53 und 55 sind beispielsweise zum Erzeugen der Ränder einer Lichtverteilung zuständig und können dazu eingerichtet sein, eine vertikale Ausdehnung der Lichtverteilung und/oder des HV-Bereichs der Lichtverteilung zu ändern.

Die eben beschriebene Zuordnung eines Bereichs der Lichtverteilung (HV-Bereich oder Rand) zu einer bestimmten Mikro-Eintrittsoptik lässt sich aber in der Praxis nicht immer verwirklichen. Oft ist es sogar vorteilhaft, beispielsweise aus Homogenitätsgründen, wenn die die mittige Linse 54 angrenzenden Mikro-Eintrittsoptiken 50 bis 53 und 55 bis 58 des Mikro-Eintrittsoptik-Arrays in ihrem zu der mittigen Linse 54 benachbarten Bereich derart ausgebildete Lichteintrittsflächen 50b bis 53b und 55b bis 58b aufweisen, dass die kollimierten Lichtstrahlen 7, die auf diese benachbarten Bereiche eintreffen, zu Lichtstrahlen 9M gebrochen werden, die beispielsweise Richtung eines Bereichs S abseits des Brennpunktes F der Mikro-Austrittsoptik 60 propagieren, wobei der Bereich S bevorzugt einen geringeren Abstand zur Lichteintrittsfläche 60b der Mikro-Austrittsoptik 60 als die Schnittweite der Mikro-Austrittoptik 60 aufweist, und später, nach einem Austritt aus der Lichtaustrittsfläche 60c der Mikro-Austrittsoptik 60 aufgrund der Defokussierung in eine Richtung seitlich des HV-Bereichs (eines Teil-Bereichs der Lichtverteilung) propagieren.

Eine von einem zumindest einen Mikro-Eintrittsoptik-Array und eine dem Mikro-Eintrittsoptik-Array zugeordneten Mikro-Austrittsoptik umfassenden Mikro-Optik-System gebildete Lichtverteilung wird im Folgenden "Mikro-Lichtverteilung" genannt.

Es kann auch vorteilhaft sein, die Krümmung der Lichtaustrittsfläche 60c im Randbereich 60d der Mikro-Austrittsoptik 60 freiformmäßig derart auszubilden, dass die Grenzstrahlen 9G der Mikro-Lichtverteilung, das heißt jene Strahlen, die beim Auftreffen auf die Lichtaustrittsfläche 60c der Mikro-Austrittsoptik 60 durch Totalreflexion TR derart reflektiert werden, dass sie nicht mehr zur Mikro-Lichtverteilung beitragen, erst bei jenen kollimierten Lichtstrahlen 7, die sich entlang der optischen Achsen 50a bis 53a und 55a bis 58a ohne Brechung durch das Mikro-Optik-System ausbreiten, auftritt. Dadurch wird die Breite der Lichtverteilung gesteuert und die Lichtstrom-Effizienz erhöht.

In einem Mikro-Eintrittsoptik-Array der Eintrittsoptik 5 kann also zumindest eine Mikro-Eintrittsoptik - mittige Linse 54 - derart ausgebildet sein und der Mikro-Austrittsoptik 60 derart zugeordnet sein, dass die kollimierten auf diese zumindest eine Mikro-Eintrittsoptik 54 einfallenden Lichtstrahlen 7 zu einem entsprechenden Lichtbündel 9b geformt werden, welches nach dem Austreten aus der Mikro-Austrittsoptik 60 in Richtung eines HV-Bereichs der Lichtverteilung propagiert.

Darüber hinaus kann zumindest eine zweite Mikro-Eintrittsoptik (in dem Fall eines 3x3 Mikro-Eintrittsoptik-Arrays sind es acht Mikro-Eintrittsoptiken 50 bis 53 und 55 bis 58) derart ausgebildet sein und der Mikro-Austrittsoptik 60 derart zugeordnet sein, dass die kollimierten auf diese zumindest eine zweite Mikro-Eintrittsoptik 50 bis 53 und 55 bis 58 einfallenden Lichtstrahlen 7 zu zumindest einem weiteren, vorzugsweise zu mehreren Lichtbündeln 9a und 9c geformt werden, welches, vorzugsweise welche, nach dem Austreten aus der Mikro-Austrittsoptik 60 in Richtung außerhalb eines HV-Bereichs der Lichtverteilung propagiert, vorzugsweise propagieren, und beispielsweise die Breite der Lichtverteilung bestimmt, vorzugsweise bestimmen.

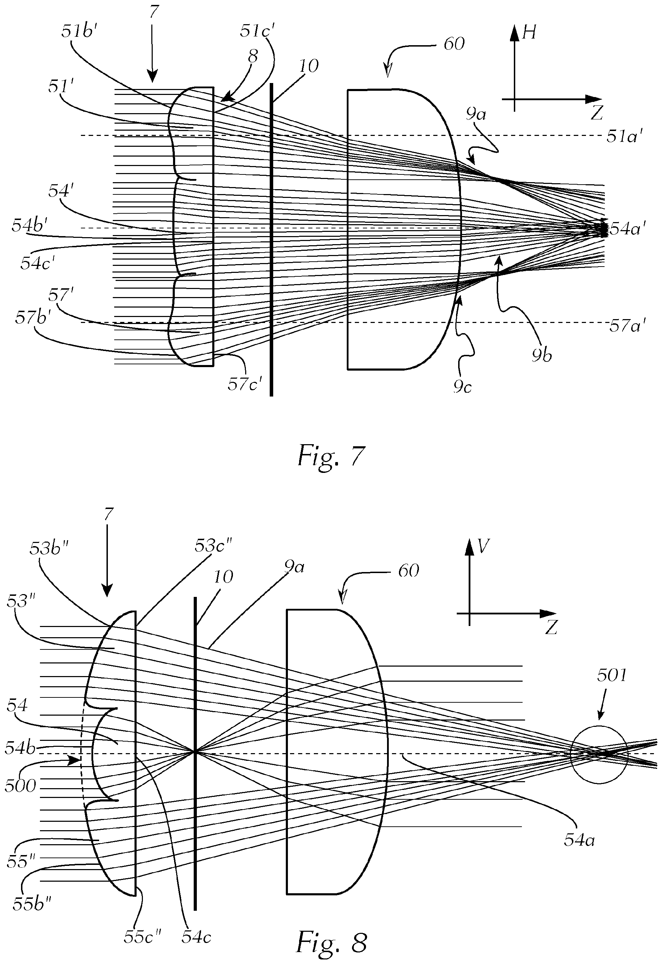

Figur 7 zeigt einen horizontalen Schnitt eines vergrößerten Ausschnitts eines Lichtmoduls mit einer optionalen Blendenvorrichtung 10, welches Lichtmodul dem in den Figuren 1 bis 6 beschriebenen Lichtmodul 1 im Wesentlichen gleich ist. Unterschiedlich bei dem in Figur 7 dargestellten Ausschnitt des Lichtmoduls ist die Form der Lichteintrittsflächen 51b', 54b', 57b' der Mikro-Eintrittsoptiken 51', 54', 57' der Eintrittsoptik. Sowohl die hier gezeigte Mitte-Optik 54' als auch die diese Mitte-Optik angrenzende Mikro-Eintrittsoptiken 51' und 57' weisen freiförmig verlaufende Lichteintrittsflächen 51b', 54b', 57b' (Freiform-Lichteintrittsflächen) auf. Funktionell gesehen bilden weiterhin die Mitte-Optik 54' im Wesentlichen den HV-Bereich und die die Mitte-Optik 54' angrenzenden Freiform-Mikro-Eintrittsoptiken 51' und 57' Ränder beziehungsweise Randbereiche einer Lichtverteilung aus.

Die Krümmung einer Lichteintrittsfläche einer einzigen Freiform-Mikro-Eintrittsoptik, beispielsweise der mittigen Mitte-Optik 54', kann an verschiedenen Stellen der Lichteintrittsfläche, beispielsweise der Lichteintrittsfläche 54b' der Mitte-Optik 54', verschiedene Werte aufweisen. Unterschiedliche Freiform-Mikro-Eintrittsoptiken können unterschiedliche Lichteintrittsflächenkrümmungsverläufe aufweisen.

Im Allgemeinen kann beispielsweise eine Hälfte der Lichteintrittsfläche einer Freiform-Mikro-Eintrittsoptik, die beim Einsetzen der Freiform-Mikro-Eintrittsoptik in die Kraftfahrzeugbeleuchtungsvorrichtung der oberen Hälfte entspricht, in Hinblick auf die andere Hälfte unterschiedlich gekrümmt sein, um zum Beispiel unterschiedlichen Verlauf der erzeugten Lichtverteilung oberhalb und unterhalb der horizontal durch den HV-Punkt verlaufenden HH-Linie zu erzielen.

Die Lichtaustrittsflächen 51c', 54c', und 57c' sind ein Teil der gemeinsamen vorzugsweise planen Fläche 8, welche nicht nur in der gezeigten Figur 7 sondern auch im allgemeinen Fall eine Austrittsoptik-Lichtaustrittsfläche bildet. Eine Verwendung der Freiformlinsen ist aus der Sicht einer genauen Ausbildung / Formung der Lichtverteilung vorteilhaft. Dabei können die Lichteintrittsflächen 51b', 54b', und 57b' an die Vorgaben für zu erzeugende Lichtverteilungen angepasst/berechnet sein.

Figur 8 zeigt einen vertikalen Schnitt eines vergrößerten Ausschnitts einer weiteren Ausführungsform des erfindungsgemäßen Lichtmoduls mit einer optionalen Beleuchtungsvorrichtung 10. Das Lichtmodul ist dem in den Figuren 1 bis 6 beschriebenen Lichtmodul 1 im Wesentlichen gleich. Unterschiedlich bei dem in Figur 8 dargestellten Ausschnitt des Lichtmoduls ist zum Beispiel die Form der Lichteintrittsflächen 53b", 55b"der die Mitte-Optik 54 angrenzenden Mikro-Eintrittsoptiken 53", 55" der Eintrittsoptik. Die in Figur 8 gezeigte Mitte-Optik 54 ist plankonvex ausgebildet. Die die Mitte-Optik 54 angrenzenden Mikro-Eintrittsoptiken 53" und 55" sind ebenfalls plankonvex ausgebildet. Dabei können die die Mitte-Optik 54 umgebenden Mikro-Eintrittsoptiken 53", 55" derart ausgebildet sein, dass ihre Lichteintrittsflächen 53b", 55b" in einer gemeinsamen Fläche 500 liegen. Dies kann sowohl für alle zu der Mitte-Optik benachbarten Mikro-Eintrittsoptiken als auch für einzelne Paare der zu der Mitte-Optik benachbarten Mikro-Eintrittsoptiken gelten, obwohl unterschiedliche Paare unterschiedlich ausgebildete gemeinsame Flächen aufweisen können. Die Lichteintrittsflächen 53b", 55b" der die Mitte-Optik 54 angrenzenden Mikro-Eintrittsoptiken 53", 55" sind vorzugsweise dazu eingerichtet, die auf sie einfallenden kollimierten Lichtstrahlen 7 derart zu brechen, dass sich diese nach dem Austritt aus der Mikro-Austrittsoptik 60 des Lichtmoduls in einen Bereich 501, dennoch aber in Ränder beziehungsweise Randbereiche einer, vorzugsweise gesetzeskonformen Lichtverteilung, beispielsweise in einer Entfernung von ca. 25 Meter vor dem Lichtmodul, bilden. Die die Mitte-Optik 54 angrenzenden Mikro-Eintrittsoptiken 53", 55" können weiters als plankonvexe Linsenstücke ausgebildet sein. Figur 8 zeigt eine solche Ausführungsform, wobei die plankonvexen Linsenstücke zusätzlich miteinander zusammenfallende optische Achsen aufweisen, die zusätzlich mit der optischen Achse 54a der Mitte-Optik zusammenfallen. Es ist denkbar, dass das in Figur 8 dargestellte, Mitte-Optik 54 und die die Mitte-Optik 54 angrenzenden Mikro-Eintrittsoptiken 53" und 55" umfassende Mikro-Eintrittsoptik-Array hinsichtlich der optischen Achse 54a rotationssymmetrisch ausgebildet ist und somit von der beispielsweise in Figur 4 quadratischen des Mikro-Eintrittsoptik-Arrays abweicht.

Wie bereits erwähnt, zeigen alle Figuren Mikro-Eintrittsoptiken, deren Lichtaustrittsflächen vorzugsweise eine gemeinsame, vorzugsweise plane Fläche 8 bilden. Dabei ist anzumerken, dass aus lichttechnischer optischer Sicht auch bikonvexe \ konvex-konkave oder andere Kombinationen mit beispielsweise konkav-gewölbten Lichteintrittsflächen, um einer stark zerstreuenden Eintrittsoptik Rechnung zu tragen, verwendet werden können.

Durch die Verwendung planer Lichtaustrittsflächen kann der Herstellungsprozess vereinfacht werden. Weiters ist es denkbar, dass die Mikro-Austrittsoptik und die zumindest zwei ihr zugeordneten Mikro-Eintrittsoptiken zu einem gemeinsamen Stapel zusammengefügt und mittels eines transparenten Klebers verbunden werden und auf diese Weise ein gemeinsames Bauteil bilden, wobei zwischen der Mikro-Austrittsoptik und der zumindest zwei ihr zugeordneten Mikro-Eintrittsoptiken zumindest eine Blende (ein Teil der zumindest einen oben genannten Beleuchtungsvorrichtung 10) vorgesehen sein kann. Darüber hinaus können bei plan ausgebildeten Flächen beispielsweise Verkippungen der Mikro-Eintrittsoptiken in Bezug aufeinander verringert und auf diese Weise zum Beispiel Gleichrichtung der optischen Achsen erzielt werden, wenn die Mikro-Eintrittsoptiken mit der Mikro-Austrittsoptik wie oben beschrieben verbunden, beispielsweise verklebt, werden.

Solange es sich nicht aus der Beschreibung einer der oben genannten Ausführungsformen zwangsläufig ergibt, wird davon ausgegangen, dass die beschriebenen Ausführungsformen beliebig miteinander kombiniert werden können. Unter anderem bedeutet dies, dass auch die technischen Merkmale einer Ausführungsform mit den technischen Merkmalen einer anderen Ausführungsform einzeln und unabhängig voneinander nach Belieben kombiniert werden können, um auf diese Weise zu einer weiteren Ausführungsform derselben Erfindung zu gelangen.

## Patentansprüche

1. Kraftfahrzeugbeleuchtungsvorrichtung (1) zum Erzeugen einer Lichtverteilung umfassend ein optisches Abbildungssystem (2) und zumindest eine dem optischen Abbildungssystem zugeordnete Lichtquelle (3),
wobei das optische Abbildungssystem (2) einen Kollimator (4), eine Eintrittsoptik (5) und eine Austrittsoptik (6) umfasst, wobei der Kollimator (4) zwischen der zumindest einen Lichtquelle (3) und der Eintrittsoptik (5) angeordnet und dazu eingerichtet ist, von der zumindest einen Lichtquelle (3) erzeugte Lichtstrahlen zu kollimieren und die kollimierten Lichtstrahlen (7) auf die Eintrittsoptik (5) des optischen Abbildungssystems (2) zu richten, wobei die Eintrittsoptik (5) dazu eingerichtet ist, ein Zwischenbild zu erzeugen, welches Zwischenbild durch die Austrittsoptik (6) vor die Kraftfahrzeugbeleuchtungsvorrichtung (1) abgebildet wird, wobei das Zwischenbild vor der Austrittsoptik (6) liegt, wobei die Eintrittsoptik (5) eine Mehrzahl von einstückig miteinander ausgebildeten Mikro-Eintrittsoptiken (50 bis 58) aufweist, wobei jeder Mikro-Eintrittsoptik (50 bis 58) eine erste optische Achse (50a bis 58a) zugeordnet ist, wobei alle ersten optischen Achsen (50a bis 58a) in gleiche Richtung verlaufen, welche Richtung der Ausbreitungsrichtung der kollimierten Lichtstrahlen (7) entspricht, wobei die Austrittsoptik (6) eine Mehrzahl von einstückig miteinander ausgebildeten Mikro-Austrittsoptiken (60) aufweist, wobei jeder Mikro-Austrittsoptik (60) eine zweite optische Achse (60a) zugeordnet ist, wobei alle zweiten optischen Achsen (60a) in die gleiche Richtung verlaufen, wobei jede Mikro-Eintrittsoptik (50 bis 58) eine der kollimierten Lichtstrahlen zugewandte Lichteintrittsfläche (50b bis 58b) und eine der Austrittsoptik (6) zugewandte Lichtaustrittsfläche (50c bis 58c) aufweist, wobei alle Lichtaustrittsflächen (50c bis 58c) eine gemeinsame Fläche (8) bilden, wobei die zumindest zwei Mikro-Eintrittsoptiken in einem NxM Mikro-Eintrittsoptik-Array, wobei N≥2 oder M≥2 gilt, vorzugsweise in einem 3x3 Mikro-Eintrittsoptik-Array angeordnet sind,
**dadurch gekennzeichnet, dass**
jeder Mikro-Austrittsoptik (60) zumindest zwei unterschiedlich ausgebildete Mikro-Eintrittsoptiken (50 bis 58) derart zugeordnet sind, dass auf die zumindest zwei unterschiedlich ausgebildeten Mikro-Eintrittsoptiken (50 bis 58) einfallende und durch diese zumindest zwei unterschiedlich ausgebildeten Mikro-Eintrittsoptiken (50 bis 58) durchtretende Lichtstrahlen (9a bis 9c) ausschließlich auf die der zumindest zwei unterschiedlich ausgebildeten Mikro-Eintrittsoptiken (50 bis 58) zugeordnete Mikro-Austrittsoptik (60) einfallen und nach dem Durchtreten durch die Mikro-Austrittsoptik (60) unterschiedliche Teil-Bereiche der Lichtverteilung bilden.

2. Kraftfahrzeugbeleuchtungsvorrichtung nach Anspruch 1, **dadurch gekennzeichnet, dass** zumindest eine erste Mikro-Eintrittsoptik (54) der zumindest zwei unterschiedlich ausgebildeten, der Mikro-Austrittsoptik (60) zugeordneten und/oder korrespondierenden Mikro-Eintrittsoptiken (50 bis 58) derart ausgebildet ist und der Mikro-Austrittsoptik (60) derart korrespondiert und/oder zugeordnet ist, dass kollimierte auf diese zumindest eine erste Mikro-Eintrittsoptik (54) einfallende Lichtstrahlen (7) nach dem Austreten aus der Mikro-Austrittsoptik (60) in Richtung eines HV-Bereichs der Lichtverteilung propagieren.

3. Kraftfahrzeugbeleuchtungsvorrichtung nach einem der Ansprüche 1 oder 2, **dadurch gekennzeichnet, dass** zumindest eine erste Mikro-Eintrittsoptik (54) als eine plankonvexe Linse ausgebildet ist.

4. Kraftfahrzeugbeleuchtungsvorrichtung nach Anspruch 2 oder 3, **dadurch gekennzeichnet, dass** zumindest eine zweite Mikro-Eintrittsoptik (50 bis 53, 55 bis 58) der zumindest zwei unterschiedlich ausgebildeten, der Mikro-Austrittsoptik (60) zugeordneten und/oder korrespondierenden Mikro-Eintrittsoptiken derart ausgebildet ist und der Mikro-Austrittsoptik (60) derart korrespondiert und/oder zugeordnet ist, dass kollimierte auf diese zumindest eine zweite Mikro-Eintrittsoptik (50 bis 53, 55 bis 58) einfallende Lichtstrahlen (7) nach dem Austreten aus der Mikro-Austrittsoptik (60) in Richtung außerhalb eines HV-Bereichs der Lichtverteilung propagieren.

5. Kraftfahrzeugbeleuchtungsvorrichtung nach Anspruch 4, **dadurch gekennzeichnet, dass** die zumindest eine zweite Mikro-Eintrittsoptik (50 bis 53, 55 bis 58) als eine plankonkave Linse oder als ein plankonkaves Linsenstück oder als ein plankonvexes Linsenstück ausgebildet ist.

6. F. Kraftfahrzeugbeleuchtungsvorrichtung nach einem der Ansprüche 1 bis 5, **dadurch gekennzeichnet, dass** die Lichteintrittsflächen (50b bis 58b) als Freiformflächen ausgebildet sind.

7. Kraftfahrzeugscheinwerfer mit zumindest einer Kraftfahrzeugbeleuchtungsvorrichtung nach einem der Ansprüche 1 bis 6.

8. Kraftfahrzeugscheinwerfer, welcher als eine Kraftfahrzeugbeleuchtungsvorrichtung nach einem der Ansprüche 1 bis 6 ausgebildet ist.

9. Kraftfahrzeug mit zumindest einem Kraftfahrzeugscheinwerfer nach Anspruch 7 oder 8.

## Claims

1. Motor vehicle lighting device (1) for generating a light distribution, comprising an optical imaging system (2) and at least one light source (3) associated with the optical imaging system,
wherein the optical imaging system (2) comprises a collimator (4), an entrance optical system (5) and an exit optical system (6), wherein the collimator (4) is arranged between the at least one light source (3) and the entrance optical system (5) and is configured to collimate light rays generated by the at least one light source (3) and to direct the collimated light rays (7) onto the entrance optical system (5) of the optical imaging system (2), wherein the entrance optical system (5) is arranged to generate an intermediate image, which intermediate image is imaged by the exit optical system (6) in front of the motor vehicle illumination device (1), the intermediate image being located in front of the exit optical system (6), the entrance optical system (5) comprising a plurality of entrance micro-optics (50 to 58) being integral with one another, each entrance micro-optics (50 to 58) being assigned a first optical axis (50a to 58a), all first optical axes (50a to 58a) extending in the same direction, which direction corresponds to the propagation direction of the collimated light beams (7), the exit optical system (6) comprising a plurality of exit micro-optics (60) being integral with one another, each exit micro-optics (60) being assigned a second optical axis (60a), all second optical axes (60a) extending in the same direction, each micro-entrance optic (50 to 58) having a light entry surface (50b to 58b) facing the collimated light beams and a light exit surface (50c to 58c) facing the exit optic (6), wherein all light exit surfaces (50c to 58c) form a common surface (8), the at least two entrance micro-optics being arranged in an NxM entrance micro-optics array, where N ≥ 2 or M ≥ 2, preferably in a 3x3 entrance micro-optics array,
**characterized in that**
at least two entrance micro-optics (50 to 58) configured differently are assigned to each micro-exit optic (60) such that light beams (9a to 9c) incident on the at least two entrance micro-optics (50 to 58) configured differently and passing through these at least two entrance micro-optics (50 to 58) configured differently are incident exclusively on the exit micro-optics (60) assigned to the at least two entrance micro-optics (50 to 58) configured differently and, after passing through the exit micro-optics (60), form different partial regions of the light distribution.

2. Motor vehicle lighting device according to claim 1, **characterized in that** at least one first micro-entrance optic (54) of the at least two entrance micro-optics (50 to 58) configured differently that are assigned and/or corresponding to the micro-exit optic (60) is formed in such a way and corresponds and/or is associated with the micro-exit optic (60) in such a way that collimated light beams (7) incident on this at least one first entrance micro-optics (54) propagate in the direction of a HV region of the light distribution after exiting from the exit micro-optics (60).

3. Motor vehicle lighting device according to one of claims 1 to 2, **characterized in that** at least one first micro-entrance optic (54) is designed as a plano-convex lens.

4. Motor vehicle lighting device according to claim 2 or 3, **characterized in that** at least one second micro-entrance optic (50 to 53, 55 to 58) of the at least two entrance micro-optics configured differently that are assigned and/or corresponding to the micro-exit optic (60) is formed in such a way and corresponds and/or is associated with the micro-exit optic (60) in such a way that collimated light beams (7) incident on said at least one second entrance micro-optics (50 to 53, 55 to 58) propagate in the direction outside a HV range of the light distribution after emerging from the exit micro-optics (60).

5. Motor vehicle lighting device according to claim 4, **characterized in that** the at least one second entrance micro-optics (50 to 53, 55 to 58) is formed as a plano-concave lens or as a plano-concave lens piece or as a plano-convex lens piece.

6. Motor vehicle lighting device according to any one of claims 1 to 5, **characterized in that** the light entry surfaces (50b to 58b) are realized as free-form surfaces.

7. Motor vehicle headlamp having at least one motor vehicle lighting device according to any one of claims 1 to 6.

8. Motor vehicle headlamp realized as a motor vehicle lighting device according to any one of claims 1 to 6.

9. Motor vehicle with at least one motor vehicle headlamp according to claim 7 or 8.

## Revendications

1. Dispositif d'éclairage de véhicule automobile (1) pour générer une répartition de la lumière, comportant un système optique de formation d'image (2) et au moins une source lumineuse (3) associée au système optique de représentation,
le système optique de formation d'image (2) comprenant un collimateur (4), une optique d'entrée (5) et une optique de sortie (6), le collimateur (4) étant disposé entre ladite au moins une source lumineuse (3) et l'optique d'entrée (5) et étant conçu pour collimater des rayons lumineux générés par la au moins une source lumineuse (3) et pour diriger les rayons lumineux collimatés (7) vers l'optique d'entrée (5) du système optique de formation d'image (2), l'optique d'entrée (5) étant conçue pour générer une image intermédiaire, laquelle image intermédiaire est reproduite par l'optique de sortie (6) devant le dispositif d'éclairage du véhicule automobile (1), l'image intermédiaire se trouvant devant l'optique de sortie (6), l'optique d'entrée (5) présentant une pluralité de micro-optiques d'entrée (50 à 58) formées solidaires les unes avec les autres, à chaque micro-optique d'entrée (50 à 58) un premier axe optique (50a à 58a) étant associé, tous les premiers axes optiques (50a à 58a) s'étendant dans la même direction, laquelle direction correspond à la direction de propagation des rayons lumineux collimatés (7), l'optique de sortie (6) présentant une pluralité de micro-optiques de sortie (60) formées solidaires les unes avec les autres, à chaque micro-optique de sortie (60) un deuxième axe optique (60a) étant associé, tous les deuxièmes axes optiques (60a) s'étendant dans la même direction, chaque micro-optique d'entrée (50 à 58) présentant une surface d'entrée de lumière (50b à 58b) orientée vers les rayons lumineux collimatés et une surface de sortie de lumière (50c à 58c) orientée vers l'optique de sortie (6), toutes les surfaces de sortie de lumière (50c à 58c) formant une surface commune (8), lesdites au moins deux micro-optiques d'entrée étant disposées dans un réseau de micro-optiques d'entrée NxM, où N ≥ 2 ou M ≥ 2, de préférence dans un réseau de micro-optiques d'entrée 3x3,
**caractérisé en ce que**
à chaque micro-optique de sortie (60) sont associées au moins deux micro-optiques d'entrée (50 à 58) de conception différente de telle sorte que les rayons lumineux (9a à 9c) qui atteignent sur lesdites au moins deux micro-optiques d'entrée (50 à 58) de conception différente et qui traversent ces au moins deux micro-optiques d'entrée (50 à 58) de conception différente atteignent exclusivement sur la micro-optique de sortie (60) associée auxdites au moins deux micro-optiques d'entrée (50 à 58) de conception différente et forment des zones partielles différentes de la répartition lumineuse après avoir traversé la micro-optique de sortie (60).

2. Dispositif d'éclairage de véhicule automobile selon la revendication 1, **caractérisé en ce qu'**au moins une première micro-optique d'entrée (54) des au moins deux micro-optiques d'entrée (50 à 58) de conception différente, associées et/ou correspondant à la micro-optique de sortie (60), est correspondant et/ou associée à la micro-optique de sortie (60) de telle manière que des rayons lumineux (7) collimatés qui atteignent sur cette au moins une première micro-optique d'entrée (54) se propagent après la sortie de la micro-optique de sortie (60) en direction d'une zone HV de la répartition lumineuse.

3. Dispositif d'éclairage de véhicule automobile selon l'une des revendications 1 à 2, **caractérisé en ce qu'**au moins une première micro-optique d'entrée (54) est réalisée en tant qu'une lentille planconvexe.

4. Dispositif d'éclairage de véhicule automobile selon la revendication 2 ou 3, **caractérisé en ce qu'**au moins une deuxième micro-optique d'entrée (50 à 53, 55 à 58) desdites au moins deux micro-optiques d'entrée de conception différente, associées et/ou correspondant à la micro-optique de sortie (60), est correspondant et/ou associée à la micro-optique de sortie (60) de telle manière que des rayons lumineux (7) collimatés qui atteignent sur cette au moins une deuxième micro-optique d'entrée (50 à 53, 55 à 58) se propagent après la sortie de la micro-optique de sortie (60) en direction de l'extérieur d'une zone HV de la répartition lumineuse.

5. Dispositif d'éclairage de véhicule automobile selon la revendication 4, **caractérisé en ce que** ladite au moins une deuxième micro-optique d'entrée (50 à 53, 55 à 58) est réalisée en tant qu'une lentille plano-concave ou d'un morceau de lentille plano-concave ou d'un morceau de lentille planoconvexe.

6. Dispositif d'éclairage de véhicule automobile selon l'une quelconque des revendications 1 à 5, **caractérisé en ce que** les surfaces d'entrée de lumière (50b à 58b) sont des surfaces de forme libre.

7. Projecteur de véhicule automobile comportant au moins un dispositif d'éclairage de véhicule automobile selon l'une quelconque des revendications 1 à 6.

8. Projecteur de véhicule automobile conçu comme un dispositif d'éclairage de véhicule automobile selon l'une quelconque des revendications 1 à 6.

9. Véhicule automobile comportant au moins un projecteur de véhicule automobile selon la revendication 7 ou 8.
